# EUROPÄISCHE PATENTSCHRIFT

(11) **EP 2 636 296 B1**
(45) Veröffentlichungstag und Bekanntmachung des Hinweises auf die Patenterteilung: **13.04.2016**
(21) Anmeldenummer: 13157637.3
(22) Anmeldetag: 04.03.2013
(51) Int. Cl.: A01D 34/73, A01D 34/82

(54) **Messerbalken**
Knife bar
Barre porte-lames

(30) Priorität: 07.03.2012 DE 102012203560
(43) Veröffentlichungstag der Anmeldung: 11.09.2013
(73) Patentinhaber: SABO-Maschinenfabrik GmbH, 51645 Gummersbach (DE)
(72) Erfinder: Viebahn, Knut, 51647 Gummersbach (DE)
(74) Vertreter: Holst, Sönke

(56) Entgegenhaltungen:
- EP-A1- 0 894 427
- FR-A1- 2 736 504
- US-A- 4 214 426
- US-A1- 2006 156 706
- US-A1- 2010 139 231

## Beschreibung

Die Erfindung betrifft einen Messerbalken, insbesondere für ein Mähgerät, mit wenigstens einem im Betrieb voreilenden Schneidbereich und mit wenigstens einem nacheilenden Flügel, sowie ein Mähgerät bzw. Mähwerk.

Zur Rasenpflege werden häufig Rasenmäher verwendet, die eine oder mehrere Trenneinrichtungen in der Art von Schneidmessern aufweisen, welche Gras bzw. Vegetation abtrennen. Das abgetrennte Gut wird durch eine entsprechende Öffnung in dem Gehäuse des Rasenmähers abgegeben und auf dem gemähten Rasen abgelegt oder durch einen an die Öffnung angrenzend angeschlossenen Fangsack aufgenommen. Alternativ kann das Mähgut auch feinzerkleinert bzw. gemulcht werden und auf den Boden abgelegt bzw. in den Rasen eingeblasen werden. Sowohl konventionelle als auch zum Mulchen geeignete Messerbalken weisen üblicherweise im Betrieb vorauseilende Schneiden, welche das Gras bzw. die Vegetation abtrennen, und den Schneiden nacheilende Flügel auf, die die durch den Messerbalken erzeugten Luftströme günstig beeinflussen sollen.

Ein wesentliches Problem eines Rasenmähers besteht in der auftretenden Geräuschbeeinträchtigung. Geräuschquellen können hierbei der Motor, insbesondere bei einem Einsatz von Verbrennungsmotoren, das Gehäuse, beispielsweise durch die Wirkung von Vibrationen, oder der Messerbalken bzw. die durch ihn erzeugten Luftströmungen und Verwirbelungen sein.

Die EP-A2-1 459 616 zeigt einen Messerbalken für einen Rasenmäher mit einer Schneidkante und einem Lüfterflügel, der beim Betrieb des Rasenmähers aus der Ebene des Messerbalkens nach oben ragt und im Bereich seines freien Endes gekrümmt ist, um den Geräuschpegel während des Betriebes des Rasenmähers zu reduzieren. Einen Messerbalken gemäß Oberbegriff des Anspruchs 1 zeigt die US 2010/139231 A1. Weitere Messer zeigen die EP 0 894 427 A1, FR 2 736 504 A1 und US 2006/156706 A1.

Die der Erfindung zugrunde liegende Aufgabe wird darin gesehen, die durch den Messerbalken erzeugten Geräusche weiter zu reduzieren.

Diese Aufgabe wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Auf diese Weise wird ein Messerbalken zur Verfügung gestellt, welcher ein verbessertes aerodynamisches Verhalten aufweist.

Ein erfindungsgemäßer Messerbalken, welcher für ein Mähgerät vorgesehen ist, weist wenigstens einen im Betrieb voreilenden Schneidbereich und wenigstens einen nacheilenden Flügel auf. Da der Flügel in einem im Betrieb nacheilenden Bereich zumindest bereichsweise nach unten abgekröpft ausgebildet ist, wird Verwirbelungen bzw. einem Abreißen der Luftströmung entgegengewirkt und die Geräuschentwicklung reduziert.

Der Schneidbereich des Messerbalkens weist eine Schneidkante auf, an der das Schnittgut sauber abgetrennt wird. Die Schneidkante bestimmt die Schneidebene des Messerbalkens.

Der Messerbalken weist wenigstens zwei Schneidbereiche auf, die vorzugsweise an gegenüberliegende Endbereiche des Messerbalkens angrenzend angeordnet sind. Derartige Messerbalken werden an bekannten handgeführten oder geschobenen Rasenmähern oder auch in Mähwerken von Aufsitzrasenmähern, Rasentraktoren oder anderen eine oder mehrere Mähkammern aufweisenden Mähgeräten eingesetzt. Ein Messerbalken mit zwei Schneidbereichen ermöglicht einen gleichmäßigen Schnitt und zeigt ein ruhiges, ausbalanciertes Rotationsverhalten. Es sind aber auch Messerbalken bekannt, welche mehr als zwei Schneidbereiche aufweisen. Eine erfindungsgemäße Anordnung eignet sich auch für derartige Messerbalken.

Es kann vorgesehen sein, dass ein Messerbalken nur einen erfindungsgemäßen Flügel aufweist. Vorzugsweise sind aber wenigstens zwei Flügel vorgesehen, die vorzugsweise in gegenüberliegenden Endbereichen des Messerbalkens angeordnet sind. Es ist wiederum auch eine Ausbildung mit mehr als zwei Flügeln denkbar.

Der Scheitelpunkt der Abkröpfung bzw. des abgekröpften Bereichs könnte in der Schneidebene des Messerbalkens liegen. Eine besonders günstige Führung der Luftströmung durch den Flügel ergibt sich aber, wenn der Scheitelpunkt von der Schneidebene des Messerbalkens beabstandet ist, so dass zwischen dem Trennblatt und der Abkröpfung ein Übergangsbereich vorgesehen sein kann.

Ist der Scheitelpunkt oberhalb der Schneidebene angeordnet, so wird die Luftströmung erst nach oben geführt, um dort im Bereich der Abkröpfung sanft auszulaufen. So wird Verwirbelungen und Geräuschentwicklungen weiter entgegengewirkt.

Weist die Abkröpfung einen nacheilenden Endbereich auf, der von der Schneidebene des Messerbalkens vorzugsweise derart beabstandet ist, dass der Endbereich oberhalb der Schneidebene angeordnet ist, so begünstigt dies das Strömungsverhaltens.

Der Flügel kann einen der Abkröpfung vorauseilenden, in Drehrichtung ansteigenden Übergangsbereich aufweisen, der mit der Schneidebene einen vorzugsweise spitzen Winkel einschließt. Üblicherweise ist der Winkel auf einer einem zentralen Bereich des Trennblatts zugewandten Bereich des Flügels flacher ausgebildet, als in einem nach außen gewandten Bereich. Eine derartige Ausführung ist einfach in der Herstellung und bewirkt ein günstiges Strömungsverhalten. Es sind aber auch abweichende Ausführungen denkbar, beispielsweise kann der Winkel über die ganze Erstreckung des Flügels in etwa gleich bleiben oder es können auch Bereiche mit unterschiedlichen Winkeln aneinander anschließen.

Der Übergangsbereich ist vorzugsweise steiler angestellt bzw. steigt vorzugsweise steiler an als entsprechende Bereiche an konventionellen Messerbalken. Hierdurch kann eine verbesserte Luftleitung erzielt werden. Der Winkel beträgt vorzugsweise zumindest abschnittsweise mehr als 15°. Es sind unter anderem Winkel von etwa 20° bis zu 45° oder auch darüber denkbar. Die Anstellung des Flügels wirkt Verwirbelungen in Kombination mit der Abkröpfung bzw. dem Übergang in den abgekröpften Bereich zusätzlich entgegen, um so eine weitere Geräuschreduzierung zu bewirken. Darüber hinaus weist ein derart ausgebildeter Flügel eine verbesserte Wurfleistung auf, je steiler er angestellt bzw. ausgebildet ist. Der steiler angestellte Flügel hat eine verstärkte mechanische Wurfleistung, wodurch das geschnittene Gras je nach Anwendungsfall besser ausgeworfen bzw. feiner zerkleinert werden kann.

Ein besonders günstiges Strömungsverhalten kann erzielt werden, wenn die Abkröpfung zumindest bereichsweise in der Art eines nach unten geöffneten Kreissegments, vorzugweise eines Halbkreises, ausgebildet ist. Es sind aber auch andere von der perfekten Kreisform weiter abweichende Ausgestaltungen möglich.

Ein erfindungsgemäßer Messerbalken kann an handgeführten wie auch handgeschobenen Mähgeräten oder auch an Mähwerken für selbstfahrende Fahrzeuge oder an durch solche gezogene oder geschobene Mähwerken verwendet werden. Es kann sich hierbei um spezielle Mulchgeräte handeln. Aber auch der Einsatz an eine oder mehrere Auswurföffnung(en) aufweisende Mähgeräten bzw. Mähwerken ist möglich, wobei vorgesehen sein kann, dass diese Auswurföffnungen zur Erzielung einer verbesserten Mulchleistung verschlossenen werden.

In der Zeichnung ist ein nachfolgend näher beschriebenes Ausführungsbeispiel der Erfindung dargestellt. Es zeigt:
- Fig. 1: eine Seitenansicht eines Mähgeräts zur Rasen-, Garten- und Grundstückspflege, wobei ein Gehäuse des Mähgeräts teilweise aufgebrochen dargestellt ist, so dass ein im Innern des Gehäuses angeordneter Messerbalken sichtbar wird,
- Fig. 2: eine Teilansicht des erfindungsgemäßen Messerbalkens in einer perspektivischen Darstellung,
- Fig. 3: an einem dem Stand der Technik zuzurechnenden Messerbalken auftretende Luftströmungen und
- Fig. 4: an einem erfindungsgemäßen Messerbalken auftretende Luftströmungen.

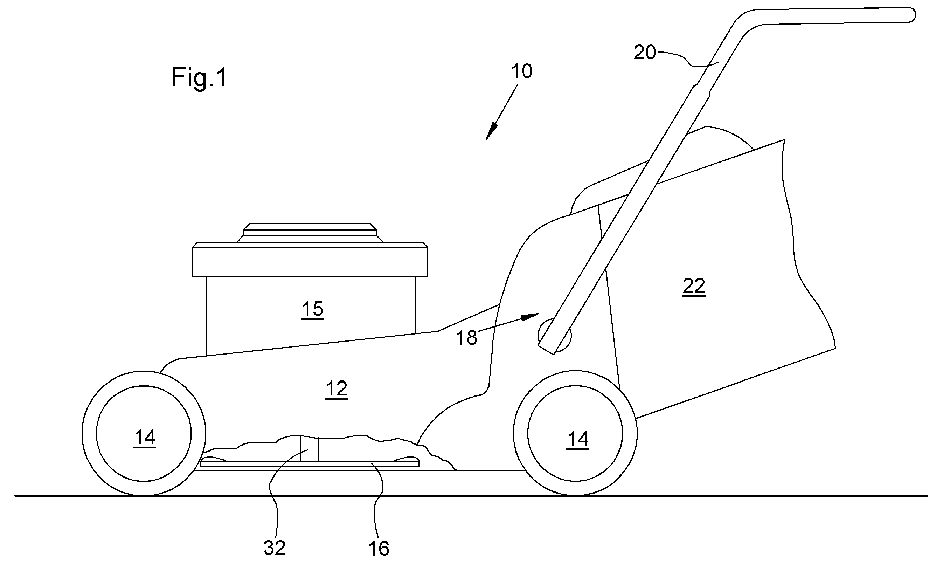

Es wird zuerst auf Fig. 1 Bezug genommen, in der ein Mähgerät 10 in der Art eines handgeführten oder auch handgeschobenen Rasenmähers gezeigt wird. Das Mähgerät 10 weist ein in Bodenrichtung geöffnetes Gehäuse 12 auf, das sich über zwei vordere und zwei rückwärtige Räder 14 auf dem Untergrund abstützt. An dem Gehäuse 12 ist ein nur andeutungsweise dargestellter Antrieb 15, beispielsweise in der Art eines Verbrennungsmotors oder auch eines Elektroantriebs vorgesehen, um ein unterhalb des Gehäuses 12 angebrachtes Mähmesser bzw. einen Messerbalken 16 anzutreiben, um Gras bzw. Pflanzenwuchs zu schneiden. An dem rückwärtigen Bereich 18 des Gehäuses 12 ist ein Führungsholm 20 angebracht. An eine in dem rückwärtigen Bereich 18 angeordnete, nicht gezeigte Auswurföffnung schließt sich ein Fangbehälter 22 an.

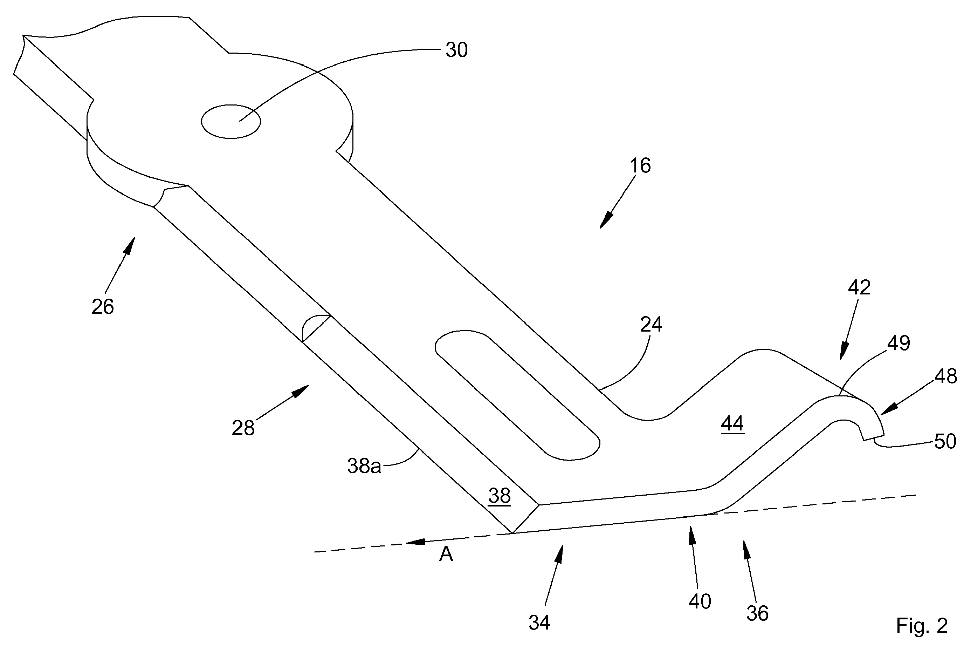

Es wird nun auf Fig. 2 Bezug genommen, in denen der Messerbalken 16 genauer dargestellt wird. Der Messerbalken 16 weist ein im Wesentlichen längliches Trennblatt 24 auf. Das Trennblatt 24 wiederum weist einen zentralen Bereich 26 sowie zwei an diesen zentralen Bereich 26 anschließende äußere Bereiche bzw. Trennarme 28 auf, welche bezogen auf den zentralen Bereich 26 symmetrisch ausgebildet sind.

Der zentrale Bereich 26 ist in im Wesentlichen konventioneller Weise in der Art eines Anschlussbereichs ausgebildet. Ein derartiger Anschlussbereich weist eine zentrale Öffnung 30 zum Aufsetzen des Messerbalkens 16 auf eine in Figur 1 gezeigte, sich im Betrieb in Rotation befindender Welle 32, auf. Der Messerbalken 16 wird durch geeignete bekannte Mittel, die nicht dargestellt sind auf der Welle 32 befestigt. Alternativ kann der Messerbalken 16 bzw. der zentrale Bereich 26 zwei oder mehrere Öffnungen bzw. Bohrungen aufweisen, mittels der der Messerbalken 16 an einem mit der Welle 32 verbundenen Anschlussflansch angeschlossen werden kann. Weitere Ausgestaltungen sind denkbar.

Die Trennarme 28 weisen einen bezogen auf die Drehrichtung (Pfeil A) des Messerbalkens 16 voreilenden Bereich 34 und einen nacheilenden Bereich 36 auf. Der voreilende Bereich 34 weist einen Schneidbereich 38 mit einer Schneidkante 38a aus. In dem nacheilenden Bereich 36 ist in einem dem zentralen Bereich 26 abgelegenen Endbereich 40 des Trennblatts 24 ein nach oben gebogener Flügel 42 angeordnet.

Der Flügel 42 weist einen an den Endbereich 40 des Trennblatts 24 anschließenden nach oben ansteigenden Übergangsbereich 44 auf. Der Übergangsbereich schließt mit einer Schneidebene 46 des Messerbalkens 16 einen Steigungswinkel α ein. Gemäß dem gezeigten Ausführungsbeispiel beträgt der Winkel circa 45°, es sind aber auch Winkel vorstellbar, die diesen Wert übersteigen oder unterschreiten. Vorzugsweise ist der Winkel allerdings größer ausgebildet, als bei bekannten Flügelausbildungen. Hier beträgt der Steigungswinkel häufig etwa 15° bzw. weniger als 15°.

An den Übergangsbereich 44 schließt sich ein abgekröpfter Bereich bzw. eine Abkröpfung 48 mit einem oberen Scheitelpunkt 49 an, der oberhalb der Schneidebene 46 angeordnet ist. Die Abkröpfung 48 endet in einem im Betrieb nacheilenden Endbereich 50, der oberhalb der Schneidebene 46 endet.

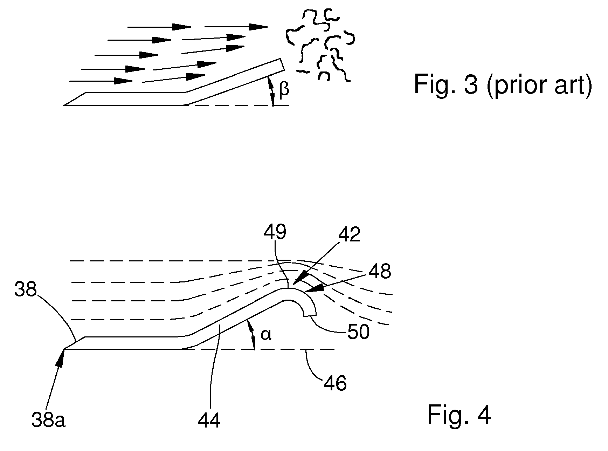

Anhand der Darstellung Figuren 3 und 4 wird im Folgenden die Wirkungsweise eines erfindungsgemäßen Messerbalken 16 dargestellt.

Figur 3 zeigt einen bekannten Messerbalken, wie er häufig in handgeschobenen oder handgeführten Rasenmäheren oder anderen Mähgeräten eingesetzt wird. Ein derartiger Messerbalken erzeugt einen Luftstrom (in Figur 3 durch Pfeile angedeutet), der über das Trennblatt streicht und durch den Flügel nach oben abgelenkt wird. Obwohl ein verhältnismäßig geringer Steigungswinkel β vorgesehen ist, der eine sanfte Ablenkung der Luftströmung bewirken und somit einer großen Geräuschentwicklung entgegenwirken soll, kommt es an der nacheilenden Kante des Flügels zu einem Abriss der Luftströmung. Dieser Strömungsabriss sowie die erzeugten Verwirbelungen können unerwünschten Lärm erzeugen.

In Figur 4 nun ist ein erfindungsgemäßer Messerbalken 16 dargestellt. Die Luftströmung ist hier durch unterbrochene Linien dargestellt. Wiederum streicht die Luftströmung über das Trennblatt 24 und wird durch den Flügel 42 nach oben abgelenkt. Erfindungsgemäß ist Flügel 42 derart ausgebildet, dass er einen stärker abgewinkelten bzw. stärker ansteigenden Übergangsbereich 44 aufweist, der die Luftströmung stärker nach oben ablenkt. An den Übergangsbereich 44 schließt im Gegensatz zu bekannten Ausführungsformen allerdings keine eine Abrisskante bildende Kante an, vielmehr geht der Übergangsbereich 44 in eine abgekröpften Bereich bzw. eine Abkröpfung 48 über. Diese Abkröpfung 48 ist in der Art eines nach unten geöffneten Kreissegments, welches im vorliegenden Ausführungsbeispiel etwa einem Halbkreis entspricht, ausgebildet. Durch den abgekröpften Bereich bzw. die Abkröpfung 48 wird die Luftströmung nicht abrupt unterbrochen, so dass es zu keinem Abriss der Luftströmung kommt bzw. Verwirbelungen vorgebeugt wird. Dies resultiert in einer reduzierten Geräuschentwicklung.

## Patentansprüche

1. Messerbalken (16) für ein Mähgerät (10), mit einem länglichen Trennblatt (24), das einen zentralen Bereich (26) sowie zwei an den zentralen Bereich (26) anschließende Trennarme (28) aufweist, wobei die Trennarme (28) einen bezogen auf eine Drehrichtung des Messerbalkens (16) vorauseilenden Bereich (34) mit einem voreilenden Schneidbereich (38) und einen nacheilenden Bereich (36) mit einem nacheilenden Flügel (42) aufweisen,
**dadurch gekennzeichnet,**
**dass** der Flügel (42) nach oben gebogen ist und einen an den Endbereich (40) des Trennblatts (24) anschließenden nach oben ansteigenden Übergangsbereich (44) aufweist und sich an den Übergangsbereich (44) ein nach unten abgekröpfter Bereich (48) anschließt.

2. Messerbalken nach Anspruch 1, **dadurch gekennzeichnet, dass** der Schneidbereich (38) eine Schneidkante (38a) aufweist, die vorzugsweise die Schneidebene (46) des Messerbalkens (16) bestimmt.

3. Messerbalken nach Anspruch 1 oder 2, **dadurch gekennzeichnet, dass** der Messerbalken (16) wenigstens zwei Schneidbereiche (38) aufweist, die vorzugsweise an gegenüberliegende Endbereiche (40) des Messerbalkens (16) angrenzend angeordnet sind.

4. Messerbalken nach einem der vorherigen Ansprüche, **dadurch gekennzeichnet, dass** der Messerbalken (16) wenigstens zwei Flügel (42) aufweist, die vorzugsweise in gegenüberliegenden Endbereichen (40) des Messerbalkens (16) angeordnet sind.

5. Messerbalken nach einem der vorherigen Ansprüche, **dadurch gekennzeichnet, dass** ein Scheitelpunkt (49) der Abkröpfung (48) von der Schneidebene (46) des Messerbalkens (16) beabstandet ist.

6. Messerbalken nach Anspruch 5, **dadurch gekennzeichnet, dass** der Scheitelpunkt (49) oberhalb der Schneidebene (46) angeordnet ist.

7. Messerbalken nach Anspruch 5 oder 6, **dadurch gekennzeichnet, dass** die Abkröpfung (48) einen nacheilenden Endbereich (50) aufweist, der von der Schneidebene (46) des Messerbalkens (16) beabstandet ist und vorzugsweise oberhalb der Schneidebene (46) angeordnet ist.

8. Messerbalken nach einem der vorherigen Ansprüche, **dadurch gekennzeichnet, dass** der Flügel (42) einen der Abkröpfung (48) vorauseilenden, in Drehrichtung ansteigenden Übergangsbereich (44) aufweist, der mit der Schneidebene (46) einen vorzugsweise spitzen Winkel α einschließt.

9. Messerbalken nach Anspruch 8, **dadurch gekennzeichnet, dass** der Winkel α vorzugsweise zumindest bereichsweise mehr als 15°, vorzugsweise aber zwischen 20° und 45° beträgt.

10. Messerbalken nach einem der vorherigen Ansprüche, **dadurch gekennzeichnet, dass** die Abkröpfung (48) zumindest bereichsweise in der Art eines nach unten geöffneten Kreissegments, vorzugweise eines Halbkreises, ausgebildet ist.

11. Mähgerät oder Mähwerk mit wenigstens einem Messerbalken (16) nach einem oder mehreren der vorherigen Ansprüche.

## Claims

1. Cutter bar (16) for a mowing machine (10), having an elongate severing blade (24) which has a central region (26) and two severing arms (28) adjoining the central region (26), wherein the severing arms (28) have a leading region (34) with respect to a direction of rotation of the cutter bar (16), with a leading cutting region (38), and have a trailing region (36) with a trailing blade (42), **characterized in that** the blade (42) is curved upwards and has an upwardly rising transition region (44) adjoining the end region (40) of the severing blade (24), and a downwardly bent region (48) adjoins the transition region (44).

2. Cutter bar according to Claim 1, **characterized in that** the cutting region (38) has a cutting edge (38a) which preferably determines the cutting plane (46) of the cutter bar (16).

3. Cutter bar according to Claim 1 or 2, **characterized in that** the cutter bar (16) has at least two cutting regions (38) which are preferably arranged adjacent to opposite end regions (40) of the cutter bar (16).

4. Cutter bar according to one of the preceding claims, **characterized in that** the cutter bar (16) has at least two blades (42) which are preferably arranged in opposite end regions (40) of the cutter bar (16).

5. Cutter bar according to one of the preceding claims, **characterized in that** an apex point (49) of the bent portion (48) is spaced apart from the cutting plane (46) of the cutter bar (16).

6. Cutter bar according to Claim 5, **characterized in that** the apex point (49) is arranged above the cutting plane (46).

7. Cutter bar according to Claim 5 or 6, **characterized in that** the bent portion (48) has a trailing end region (50) which is spaced apart from the cutting plane (46) of the cutter bar (16) and is preferably arranged above the cutting plane (46).

8. Cutter bar according to one of the preceding claims, **characterized in that** the blade (42) has a transition region (44) which runs ahead of the bent portion (48), rises in the direction of rotation and encloses a preferably acute angle α with the cutting plane (46).

9. Cutter bar according to Claim 8, **characterized in that** the angle α is preferably, at least in regions, more than 15°, but preferably between 20° and 45°.

10. Cutter bar according to one of the preceding claims, **characterized in that** the bent portion (48) is formed, at least in regions, in the manner of a downwardly open circular segment, preferably a semicircle.

11. Mowing machine or mower with at least one cutter bar (16) according to one or more of the preceding claims.

## Revendications

1. Barre porte-lame (16) pour une faucheuse (10), comprenant une lame de séparation allongée (24) qui présente une région centrale (26) ainsi que deux bras de séparation (28) se raccordant à la région centrale (26), les bras de séparation (28) présentant une région en avant (34) par rapport à un sens de rotation de la barre porte-lame (16) avec une zone de coupe en avant (38) et une région en arrière (36) avec une aile en arrière (42),
**caractérisée en ce que**
l'aile (42) est courbée vers le haut et présente une région de transition (44) montant vers le haut et se raccordant à la région d'extrémité (40) de la lame de séparation (24) et une région coudée vers le bas (48) se raccordant à la région de transition (44).

2. Barre porte-lame selon la revendication 1, **caractérisée en ce que** la région de coupe (38) présente une arête de coupe (38a) qui définit de préférence le plan de coupe (46) de la barre porte-lame (16).

3. Barre porte-lame selon la revendication 1 ou 2, **caractérisée en ce que** la barre porte-lame (16) présente au moins deux régions de coupe (38) qui sont de préférence disposées de manière adjacente à des régions d'extrémité opposées (40) de la barre porte-lame (16).

4. Barre porte-lame selon l'une quelconque des revendications précédentes, **caractérisée en ce que** la barre porte-lame (16) présente au moins deux ailes (42) qui sont disposées de préférence dans des régions d'extrémité opposées (40) de la barre porte-lame (16).

5. Barre porte-lame selon l'une quelconque des revendications précédentes, **caractérisée en ce qu'**un sommet (49) du coude (48) est espacé du plan de coupe (46) de la barre porte-lame (16).

6. Barre porte-lame selon la revendication 5, **caractérisée en ce que** le sommet (49) est disposé au-dessus du plan de coupe (46).

7. Barre porte-lame selon la revendication 5 ou 6, **caractérisée en ce que** le coude (48) présente une région d'extrémité en arrière (50) qui est espacée du plan de coupe (46) de la barre porte-lame (16) et qui est disposée de préférence au-dessus du plan de coupe (46).

8. Barre porte-lame selon l'une quelconque des revendications précédentes, **caractérisée en ce que** l'aile (42) présente une région de transition (44) en avant du coude (48), montant dans le sens de rotation, qui forme avec le plan de coupe (46) un angle α de préférence aigu.

9. Barre porte-lame selon la revendication 8, **caractérisée en ce que** l'angle α vaut de préférence au moins en partie plus de 15°, de préférence toutefois est compris entre 20° et 45°.

10. Barre porte-lame selon l'une quelconque des revendications précédentes, **caractérisée en ce que** le coude (48) est réalisé au moins en partie à la manière d'un segment de cercle ouvert vers le bas, de préférence d'un demi-cercle ouvert vers le bas.

11. Faucheuse ou dispositif de coupe comprenant au moins une barre porte-lame (16) selon l'une quelconque ou plusieurs des revendications précédentes.
